(19) Europäisches Patentamt
European Patent Office
Office européen des brevets

(11) **EP 3 014 570 B1**

(12) **FASCICULE DE BREVET EUROPEEN**

(45) Date de publication et mention
de la délivrance du brevet:
**22.03.2017 Bulletin 2017/12**

(21) Numéro de dépôt: **14733164.9**

(22) Date de dépôt: **25.06.2014**

(51) Int Cl.:
**G06T 5/00** (2006.01)

(86) Numéro de dépôt international:
**PCT/EP2014/063391**

(87) Numéro de publication internationale:
**WO 2014/207042 (31.12.2014 Gazette 2014/53)**

(54) **PROCEDE DE REDUCTION DE BRUIT DANS DES SEQUENCES D'IMAGES FLUOROSCOPIQUES**

VERFAHREN ZUR RAUSCHVERMINDERUNG IN SEQUENZEN VON FLUOROSKOPISCHEN BILDERN

METHOD FOR REDUCING NOISE IN SEQUENCES OF FLUOROSCOPIC IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2013 FR 1301524**

(43) Date de publication de la demande:
**04.05.2016 Bulletin 2016/18**

(73) Titulaire: **THALES**
**92400 Courbevoie (FR)**

(72) Inventeurs:
- **AMIOT, Carole**
  **F-38430 Moirans (FR)**
- **GIRARD, Catherine**
  **F-38430 Moirans (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 385 494**

- **CAROLE AMIOT ET AL: "Contextual filtering in curvelet domain for fluoroscopic sequences", PROCEEDINGS OF SPIE, vol. 8669, 13 mars 2013 (2013-03-13), page 86690N, XP055106483, ISSN: 0277-786X, DOI: 10.1117/12.2006795**
- **JEAN-LUC STARCK ET AL: "The curvelet transform for image denoising", IEEE TRANSACTIONS ON IMAGE PROCESSING, IEEE SERVICE CENTER, PISCATAWAY, NJ, US, vol. 11, no. 6, 1 juin 2002 (2002-06-01), pages 670-684, XP002485325, ISSN: 1057-7149, DOI: 10.1109/TIP.2002.1014998 [extrait le 2002-08-07]**
- **M. CESARELLI ET AL: "X-ray fluoroscopy noise modeling for filter design", INTERNATIONAL JOURNAL OF COMPUTER ASSISTED RADIOLOGY AND SURGERY, vol. 8, no. 2, 1 mars 2013 (2013-03-01), pages 269-278, XP055106488, ISSN: 1861-6410, DOI: 10.1007/s11548-012-0772-8**
- **BUADES A ET AL: "A review of image denoising algorithms, with a new one", MULTISCALE MODELING & SIMULATION, SOCIETY FOR INDUSTRIAL AND APPLIED MATHEMATICS, US, vol. 4, no. 2, 18 juillet 2005 (2005-07-18), pages 490-530, XP002496485, ISSN: 1540-3459, DOI: 10.1137/040616024**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'objet de l'invention concerne un procédé de réduction de bruit dans des séquences d'images fluoroscopiques par détection des traits dans le domaine des curvelets, appariement des traits détectés et filtrage temporel adapté au type de coefficients associés à un trait.

L'invention est notamment utilisée dans le domaine de l'imagerie par rayons X et plus particulièrement celui de l'imagerie médicale.

Dans le domaine de l'imagerie médicale, l'imagerie par fluoroscopie à rayons X permet de fournir un flux d'images d'un patient à un médecin lors d'interventions chirurgicales dites minimalement invasives. Ces opérations dites minimalement invasives sont de plus en plus utilisées, car elles provoquent moins de douleurs postopératoires pour les patients et car elles diminuent les risques d'infection. Ces opérations requièrent de pouvoir suivre des objets médicaux dans le système artériel du patient, par exemple à l'aide de séquences d'images acquises par rayons X. Une telle intervention peut être longue et la dose de rayons auxquels le patient est soumis peut avoir des effets néfastes sur la santé des personnes qui sont exposées. Pour la santé du personnel médical comme celle du patient, il est donc nécessaire de réduire le plus possible la dose de rayons reçue. Cependant ? une baisse de la dose de rayons X se traduit par une augmentation du bruit et une baisse du contraste sur les images. Il est donc important, si l'on veut pouvoir réduire la dose de rayons par image, de disposer d'algorithmes de débruitage ou réduction de bruit, afin de visualiser des images de bonne qualité.

Différentes méthodes ont été développées dans l'art antérieur pour réduire le bruit d'images. Ces méthodes font appel, par exemple, à des transformées en ondelettes. Le défaut majeur des transformées en ondelettes est leur difficulté à bien prendre en compte les contours des images. Le nombre d'orientations qu'une ondelette peut prendre dépend du type utilisé. Dans tous les cas, les fonctions de base ne présentent pas d'anisotropie, ce qui ne leur confère pas un caractère optimal pour la représentation des courbes, et au maximum, une ondelette réelle peut prendre 6 orientations différentes. Ce nombre est insuffisant pour représenter de manière optimale la diversité des orientations contenues dans une image naturelle.

Bismuth et al dans le document intitulé « A device enhancing and denoising algorithm for x-ray cardiac fluoroscopy », publié dans Pattern Recognition, 2008, ICPR, 2008, 19th International Conference on, pp. 1-4, IEEE, 2008, utilisent la transformée en ondelettes pour obtenir un fond débruité, mais ceci a tendance à brouiller les contours.

Tomic et al, dans le document intitulé « Adaptive spatio-temporal denoising of fluoroscopic x-ray sequences » publié dans Biomedical Signal Processing and control, vol.7, n°2, pp 173-179, 2012, privilégient une approche spatio-temporelle, puisqu'ils réindexent leur signal 2D+ temps en un signal 1 D. Ainsi, après l'application d'une transformée en ondelette préservant les contours, ils obtiennent un signal débruité à la fois spatialement et temporellement. Cependant, à cause de la réindexation, la méthode ne permet pas de prendre en compte des mouvements forts tels que les mouvements cardiaques, qui nécessiteraient un recalage spatial.

D'autres méthodes se sont concentrées uniquement sur l'aspect temporel, afin de tirer parti de la redondance des images de la séquence et d'éviter une coloration spatiale du bruit. Une méthode décrite dans le document d'Auvray et al. "Joint motion estimation and layer segmentation in transparent image sequences- Application to transparent-motion-compensated noise reduction in x-ray image sequences", 2008, propose un filtrage temporel en compensant les mouvements. Il est possible de faire l'approximation qu'un pixel est associé à un seul vecteur de mouvement. Cela simplifie la méthode, mais introduit des erreurs. Les images fluoroscopiques étant multiplicatives, les couches anatomiques se superposent. Or elles sont animées de mouvements différents et il est probable que plusieurs objets ayant des trajectoires différentes apparaissent sur le même pixel. Auvray et al, proposent ainsi de séparer les couches transparentes et d'évaluer les vecteurs de mouvement sur chacune de ces couches. Cette méthode présente l'inconvénient de devoir évaluer en chaque partie de l'image le nombre de couches transparentes, ce qui est extrêmement difficile à obtenir.

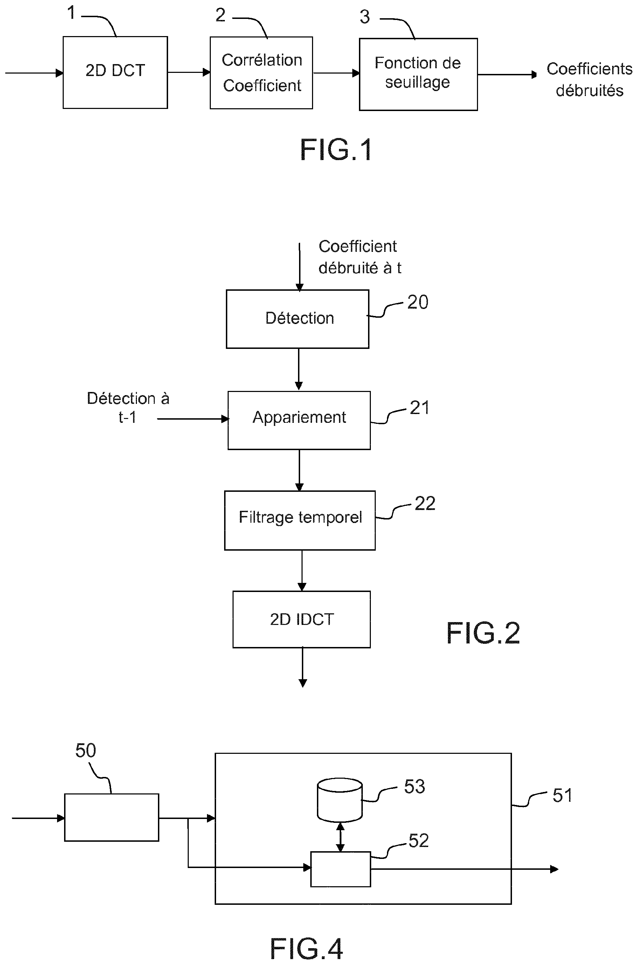

La figure 1 schématise une méthode connue de l'art antérieur qui met en oeuvre l'aspect spatial du débruitage par la méthode des curvelets. L'image est soumise à une étape de transformée spatiale 2D, puis les propriétés de corrélation des coefficients sont vérifiées. Si ces propriétés ne sont pas respectées, l'amplitude des coefficients en question est modifiée avant d'appliquer la fonction de seuillage. La méthode utilise, par exemple, trois seuils délimitant quatre zones dans la fonction de seuillage. Ces zones sont utilisées pour vérifier la cohérence entre les coefficients et détecter ainsi des changements importants qui seraient dus au bruit. L'algorithme développé jusqu'à présent permet de préserver les contours lors du débruitage.

Le traitement spatial décrit permet de réduire le nombre d'artéfacts présents dans l'image débruitée, mais il ne permet pas de les supprimer totalement. En particulier, plus on baisse la dose, plus le nombre d'artefacts augmente. La faible redondance spatiale et les contraintes de temps ne permettent pas d'améliorer les performances de ce traitement. Il est néanmoins possible de l'utiliser avec un filtrage temporel qui moyenne les valeurs d'un pixel de l'image dans le temps. Ce filtre est appliqué avant le filtrage spatial, et l'utilisation conjointe des deux permet d'obtenir des images débruitées sans artefacts. Cependant, afin de préserver les objets en mouvement, les capacités de débruitage du filtre temporel sont réduites. Son utilisation limite donc les possibilités quant à la réduction de dose de rayons.

La publication intitulée « Curvelet transform-based technique for tracking of moving objects" de S.Nigam et A.Khare, Computer Vision, IET, vol.6, n°3, pp231-251, 2012 décrit une méthode de suivi d'objets dans les curvelets. Elle utilise la conservation de l'énergie totale (inter et intra-échelles) afin d'actualiser la position de l'objet suivi. Les résultats ont été publiés pour des vidéos non bruitées et montrent de meilleurs résultats de suivi que les méthodes spatiales ou de suivi dans les ondelettes.

L'objet de l'invention repose sur une nouvelle approche qui permet d'améliorer les performances du filtrage temporel en termes de réduction de bruit, tout en conservant les objets en mouvement. Le procédé selon l'invention va utiliser les transformées en curvelets discrètes des images de la séquence.

L'invention concerne un procédé de réduction de bruit dans une séquence d'images fluoroscopiques acquises par un détecteur à rayons X, une image comprenant un ou plusieurs traits, une image étant représentée par des coefficients curvelets $c_{t,s,\theta b,i,j}$ où s est l'échelle de l'image, $\theta_{sb}$ sa sous-bande liée à l'angle d'un trait dans l'image et (i,j) sa position relative, le procédé étant caractérisé en ce qu'il comporte en combinaison au moins les étapes suivantes :

- on détecte des traits dans une image dans le domaine des curvelets, en utilisant les coefficients curvelets sous-bande par sous-bande et en déterminant la réponse maximale d'un filtre attaché à une sous-bande $\theta_{sb}$, et on mémorise les traits détectés,
- on apparie localement les traits détectés,

    - on considère un ensemble de coefficients curvelets, on teste si un coefficient curvelet considéré appartient à un trait détecté au temps t ou à un instant antérieur,

        - si le coefficient curvelet appartient à un trait détecté, on teste si le trait, auquel le coefficient appartient, est apparié à un trait détecté à un temps antérieur, si c'est le cas, alors, on classe le coefficient curvelet dans un premier ensemble,
        - si le coefficient n'est pas détecté ou si le coefficient curvelet appartient à un trait détecté mais non apparié à un trait détecté à un temps antérieur, alors on constitue au moins un deuxième ensemble,
        - on applique un premier coefficient pour filtrer temporellement les coefficients curvelets appartenant au premier ensemble et au moins un deuxième coefficient pour filtrer temporellement les coefficients curvelets appartenant au deuxième ensemble,
        - on détermine l'image débruitée à partir des coefficients curvelets filtrés temporellement.

Selon une autre variante de réalisation, le procédé comporte au moins une étape de détection des traits comprenant par exemple les étapes suivantes :

- on détecte le ou les traits dans l'image par traitement dans le domaine des curvelets en concaténant les coefficients curvelets sous-bandes par sous-bandes,

    - on se place à l'échelle en curvelet de plus haute fréquence $s_{max}$ dans la décomposition,
    - on calcule, pour chaque coefficient curvelet $c_{t,s,\theta sb,i,j}$, ses coefficients parents aux échelles inférieures contenant de l'information haute fréquence,
    - on somme ensuite ces coefficients curvelets pour obtenir une matrice de coefficients concaténés $c_{concatene}$,
    - on applique la détection des traits sur les matrices de coefficients concaténés,
    - on calcule pour chaque coefficient concaténé la réponse maximale des filtres orientés rattachés à cette sous-bande :

$$F(c_{concatene}) = max_{filtres} \sum_{p,q \in filtre} |c_{concatene}(\theta_{sb}, i+p, j+q)|$$

avec p, q des positions qui donnent une orientation,
    - on seuille par hystérésis le résultat de la réponse maximale qui donne les traits retenus et enregistrés pour l'image donnée, lorsqu'un coefficient est supérieur au seuil haut, on conserve tout son voisinage étendu supérieur au seuil bas,
    - on définit un trait référent en sélectionnant la position du trait à l'échelle de fréquence la plus haute,

Selon une variante de réalisation, le procédé comporte une étape d'appariement local des traits comprenant par exemple les étapes suivantes :

- on considère un ensemble de coefficients curvelets définis à un instant t-1 antérieur à l'instant t,

  - on teste si un coefficient curvelet appartient à un trait détecté à l'instant t ou à l'instant t-1,

    - si le résultat du test est négatif, alors on classe le coefficient curvelet comme n'appartenant pas à un objet,
    - si le résultat du test est positif, alors,

      - on teste si le trait auquel appartient le coefficient est apparié à un trait détecté à l'instant t-1 ou à l'instant t-2,
      - si le résultat du test est négatif, alors on classe le coefficient curvelet comme n'appartenant pas à un objet,
      - si le résultat du test est positif, alors on classe le coefficient curvelet comme appartenant à un objet,

- on obtient au moins deux ensembles de coefficients correspondant à au moins deux types de coefficients curvelets.

Le procédé peut aussi comporter une étape de filtrage temporel comprenant, par exemple, les étapes suivantes :

- pour les coefficients curvelets n'appartenant pas à un objet, on moyenne le coefficient détecté à l'instant t avec le coefficient détecté à l'instant t-1,
- pour les coefficients curvelets appartenant à un objet, on applique un filtrage plus faible.

Le procédé peut aussi comporter une étape de transformation inverse où l'on déterminer l'image débruitée à partir des coefficients filtrés temporellement.
Selon un mode de réalisation, l'étape de filtrage temporel on définit deux coefficients de gain $\alpha$ et $\beta$, avec $0 < \alpha < \beta \leq 1$.

- si le coefficient curvelet n'a pas été détecté, ou s'il a été détecté mais n'a pas été apparié, on applique le gain $\alpha$ aux coefficients à l'instant t et le gain $(1-\alpha)$ sur le même coefficient à t-1 :

$$|\tilde{c}_t| = \alpha|c_t| + (1-\alpha)|\tilde{c}_{t-1}|$$

- si le coefficient a été détecté au temps t ou au temps t-1, on lui applique un gain $\beta$, et on applique à ses voisins un gain qui décroît de $\beta$ à $\alpha$, en fonction de la distance du voisin au coefficient détecté avec une décroissance donnée.

Selon un mode de réalisation, la décroissance du gain est réalisée de manière linéaire ou gaussienne.
Les coefficients curvelets détectés au temps t sont, par exemple, moyennés avec l'ensemble des coefficients curvelets détectés au temps t-1 et avec lesquels ils sont appariés.
Selon une variante de réalisation, on utilise les coefficients curvelets débruités au temps t à la place des coefficients curvelets bruités dans le moyennage, soit pour les coefficients ayant appartenu à un trait au temps précédent, soit pour les coefficients appartenant à un trait apparié à ce temps, soit pour ces deux types de coefficients.
Pour apparier les traits appartenant à un même objet, le procédé exécute, par exemple, les étapes suivantes :

- on définit une fonction de coût et on utilise comme indicateurs de ressemblance la longueur, l'intensité, le déplacement, l'angle du trait,
- on définit l'énergie globale comme

$$E_{globale} = w_l E_{longueur} + w_i E_{intensite} + w_d E_{deplacement} + w_a E_{angle}$$

où $w_l$, $w_i$, $w_d$ et $w_a$ traduisent la confiance des indicateurs, avec $w_l$, $w_i$, $w_d$ et $W_a$ =1,
- on calcule cette énergie globale pour tous les couples de traits dont un trait est détecté à t et l'autre à t-1,
- on applique une méthode adaptée à obtenir la liste des appariements minimisant le poids des énergies,

- si le coefficient curvelet ne correspond pas à un trait, alors le procédé exécute une étape de moyennage temporel.

La longueur $L_{min}$ du plus petit des traits à comparer et la longueur $L_{max}$ du plus grand des traits à comparer sont définies, par exemple de la manière suivante :

$$E_{longueur} = 1 - \frac{L_{min}}{L_{max}}$$

$I_{min}$ l'intensité la plus faible des deux traits et $I_{max}$ l'autre

$$E_{intensite} = 1 - \frac{I_{min}}{I_{max}}$$

$$E_{deplacement} = \frac{(|i_t^I - i_{t-1}^I| + |i_t^E - i_{t-1}^E|)\frac{\mu}{m} + (|j_t^I - j_{t-1}^I| + |j_t^E - j_{t-1}^E|)\frac{\mu}{n}}{2}$$

les exposants I et E désignent les extrema des traits au temps t et t-1.

$$E_{angle} = \nu \times (\theta_{t-1} - \theta_t)_{[\Pi]}$$

où les θ représentent l'orientation des traits détectés aux temps t et t-1.

Le procédé peut comporter une étape pour augmenter le contraste d'une image en multipliant les coefficients curvelets ayant un gain est supérieur à $| \xi \times \beta |$ par un coefficient $\rho$, $1 < \rho$, avec $\xi$ choisi tel que : $\alpha < \xi\beta < \beta$.

Selon une variante de réalisation, on applique un coefficient multiplicateur $\rho$ aux coefficients curvelets détectés, avec une décroissance de $\rho$ à 1 dans un voisinage intra-échelle.

D'autres caractéristiques et avantages du procédé selon l'invention apparaîtront mieux à la lecture de la description qui suit d'un exemple de réalisation donné à titre illustratif et nullement limitatif annexé des figures qui représentent :

- la figure 1, un schéma d'un procédé selon l'art antérieur,
- la figure 2, un schéma de principe du procédé selon l'invention,
- la figure 3, des étapes possibles pour la mise en oeuvre du procédé,
- la figure 4, un schéma de système permettant l'acquisition et le traitement des images acquises.

La description qui suit est donnée à titre illustrative et nullement limitative. La figure 2 schématise le principe du filtrage temporel appliqué à partir des coefficients débruités obtenus par le débruitage spatial selon un principe connu de l'art antérieur, tel que celui décrit à la figure 1.

Le procédé utilise les transformées en curvelets discrètes des images d'une séquence. Les coefficients débruités sont détectés, 20, puis transmis à une étape d'appariement local des traits, 21, détaillée plus loin dans la description. Les données appariées sont ensuite soumises à une étape de filtrage temporel 22 permettant de préserver le mouvement des objets dans l'image et une étape 23 de transformée discrète en curvelets inverse 2D IDCT (abrégé anglo-saxon pour Transformée Discrète en Curvelets Inverse) pour produire l'image finale.

Dans les curvelets, tous les éléments de type courbes présents dans une image, tels que les discontinuités 2D, sont représentés sous forme de segments. Ce sont eux qui permettent une reconstruction de l'image.

Pour la suite de la description, on considère une séquence d'images fluoroscopiques $x_t$ acquises par un détecteur à rayons X, où t désigne les instants d'acquisition dans la séquence, le détecteur de rayons X transmettant les données acquises à un dispositif de traitement des données adapté. Chaque image est composée d'une matrice de pixels ayant chacun une valeur $x_t(p,q)$ représentative d'un niveau de signal, avec p et q désignant respectivement la ligne et la colonne de la matrice. La valeur est par exemple codée sur 16 bits et comprise entre 0 et 65535. Le rapport contraste sur bruit est défini comme suit :

$$CNR = (\text{niveau de gris de l'objet} - \text{niveau de gris du fond})/ \sigma$$

σ est défini comme l'écart type

où le bruit est de préférence déterminé sur une zone de l'image où il n'y a pas d'objets d'intérêt, où le contraste est déterminé à partir de points correspondant à un objet d'intérêt, en utilisant une méthode connue de l'Homme du métier.

Les liens dit de parenté qu'il est possible d'établir entre un coefficient curvelet de référence et des coefficients qui lui sont liés sont définis ci-après. On distingue dans cette catégorie les coefficients parents, les voisins et les cousins définis par rapport à un coefficient de référence. Un coefficient parent est défini comme un coefficient situé à la même position relative que le coefficient curvelet de référence, mais dans l'échelle suivante de fréquence plus basse. Un coefficient voisin correspond à un coefficient situé à une position connexe de la position du coefficient curvelet. On distingue un coefficient voisin situé dans la direction de la curvelet qui est appelé voisin aligné, des autres coefficients qui sont appelés voisins non-alignés. Les coefficients cousins sont situés à la même position relative que celle du coefficient curvelet de référence, mais à une autre orientation. Si l'orientation est contiguë, le terme de cousin adjacent est utilisé. Si l'orientation est l'opposée de l'orientation du coefficient, le terme de cousin opposé est employé.

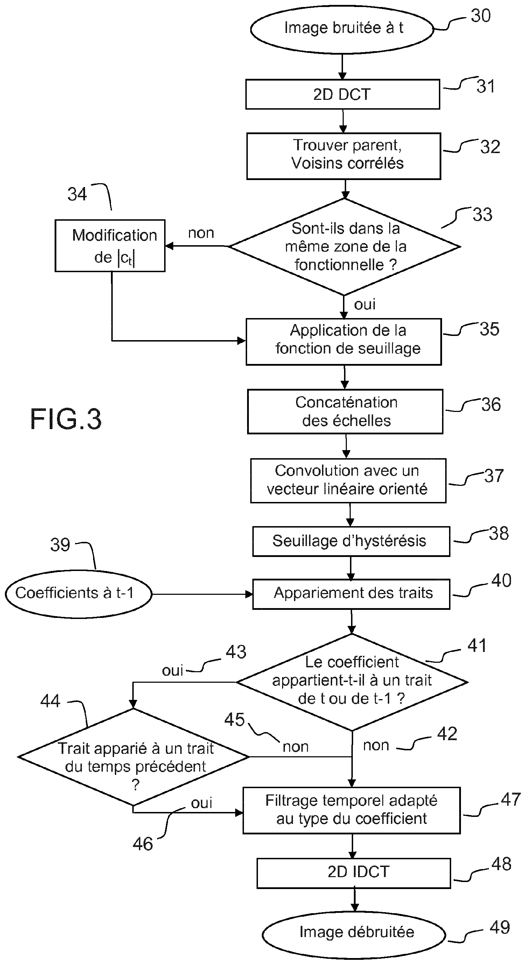

La figure 3 représente la succession d'un exemple d'étapes mises en oeuvre par le procédé selon l'invention.

Dans une première étape du procédé selon l'invention, l'image $x_t$ bruitée à t, 30, générée par le détecteur de rayons X et transmise au dispositif de traitement d'images, est filtrée spatialement 31 afin d'obtenir des coefficients débruités obtenus par le débruitage spatial.

Soit $c_t^D$ les coefficients discrets de la transformée en curvelet d'une image au temps t. Par la suite, l'exposant D n'est pas précisé pour ne pas surcharger les notations. Un coefficient curvelet est identifié par son échelle s qui représente la résolution de l'image (basse fréquence vs haute fréquence), sa sous-bande θsb, qui est liée à l'angle d'un trait dans l'image, et sa position relative représentée par le couple (i, j), les coordonnées d'un coefficient dans la sous-bande de la représentation en curvelet de l'image à laquelle il appartient. Un tel coefficient ou coefficient curvelet est dénoté $C_{t,s,\theta sb,i,j}$.

Les étapes référencées sur la figure 3, permettant de trouver les parents, 32, les voisins corrélés, 33, pour déterminer si ces parents ou voisins corrélés sont dans une même zone et éventuellement modifier étape 34 le coefficient $C_t$, sont décrites dans la demande FR 2 978 273 déposée par le Demandeur et connue de l'Homme du métier.

L'étape de seuillage 35 produit les coefficients curvelets débruités spatialement, $\hat{c}_{t,s}\theta_{sb},i,j$ pour une image acquise. La fonction de seuillage 35 est composée, par exemple, de deux étapes : dans un premier temps on vérifie la cohérence de l'amplitude du coefficient curvelet avec les coefficients qui lui sont liés, comme il a été défini précédemment, et on rétablit cette cohérence si besoin est. Dans un second temps, on applique la fonction de seuillage.

La fonction de seuillage est définie, par exemple, en fonction de trois seuils T1; T2 et T3 (T1 < T2 < T3) qui dépendent de l'écart-type (calculé sur l'image bruitée initiale). Elle s'écrit de la manière suivante :

$$\begin{aligned}
|\hat{c}_{t,s,\theta_{sb},i,j}| &= 0 & \text{si } |c_{t,s,\theta_{sb},i,j}| < T1 \\
|\hat{c}_{t,s,\theta_{sb},i,j}| &= |c_{t,s,\theta_{sb},i,j}| - T_1 & \text{si } T_1 < |c_{t,s,\theta_{sb},i,j}| < T_2 \\
|\hat{c}_{t,s,\theta_{sb},i,j}| &= \frac{1}{1+exp(-\lambda(|c_{t,s,\theta_{sb},i,j}|-\gamma))} - T_1 & \text{si } T_2 < |c_{t,s,\theta_{sb},i,j}| < T_3 \\
|\hat{c}_{t,s,\theta_{sb},i,j}| &= |c_{t,s,\theta_{sb},i,j}| & \text{si } T_3 < |c_{t,s,\theta_{sb},i,j}|
\end{aligned}$$

où $\gamma$ et $\lambda$ sont des paramètres calculés pour que la fonction soit continue sur son intervalle de définition.

Les voisins et les parents étant corrélés à un coefficient curvelet considéré, il est possible de vérifier la cohérence de l'information de la manière décrite ci-après.

L'étape de seuillage spatial, 35, est, par exemple, réalisée sur les coefficients qui se trouvent dans la même zone de la fonctionnelle que le coefficient considéré.

Le coefficient parent $c_{parent}$, est le coefficient curvelet qui se trouve à la même position relative que le coefficient curvelet $c_{t,s,\theta sb,i,j}$, dans la sous-bande représentant la même orientation, à l'échelle de plus basse fréquence. On notera ici s - 1 l'échelle de plus basse fréquence par rapport à l'échelle s du curvelet. Si le nombre d'orientations est plus faible, alors $\theta_{sb}^{parent} = [\theta_{sb} / 2]$ sinon on garde la même sous-bande $\theta_{sb}^{parent} = \theta_{sb}$

De même en appelant $m_{s,\theta sb}$ et $n_{s,\theta sb}$ les dimensions de la sous-bande à l'échelle s, alors les nouvelles positions du coefficient parent se déduisent de la manière suivante :

$$i^{parent} = \left[ \frac{i \times m_{s-1, \theta_{sb}^{parent}}}{m_{s, \theta_{sb}}} \right]$$

et

$$j^{parent} = \left[ \frac{j \times n_{s-1, \theta_{sb}^{parent}}}{n_{s, \theta_{sb}}} \right]$$

On va alors vérifier que le coefficient curvelet $|c_{t,s}\theta_{sb,i,j}|$ est situé entre les mêmes seuils que les coefficients curvelets voisins $|c|$ et le coefficient curvelet parent $\left| c_{t,s-1}\theta_{sb}^{parent}{}_{i^{parent}, j^{parent}} \right|$, en traitant tous les cas pour des appartenances à des zones différentes. Dans la suite, dans un souci de simplification des notations, on enlèvera les indices lorsque la lecture est évidente, et on indiquera juste par la dénomination parent ou voisins les coefficients.

A l'issue de l'étape de seuillage spatial, 35, on a donc des coefficients curvelets débruités correspondant à une image donnée.

Le procédé selon l'invention met en oeuvre une étape de détection des traits après la décomposition filtrée spatialement de l'image en curvelets. Une décomposition préalablement filtrée permet notamment de réduire les faux-positifs lors de la détection. Sans sortir du cadre de l'invention, il serait aussi possible d'utiliser la décomposition bruitée, et les étapes décrites ci-après peuvent aussi s'appliquer sur des coefficients curvelets non filtrés.

La détection des traits dans une image se fait par exemple en utilisant une concaténation 36 des échelles de la décomposition en curvelet. On commence par concaténer les coefficients curvelets de l'image sous-bande par sous-bande. Autrement dit, on se place à l'échelle en curvelet de plus haute fréquence dans la décomposition. On l'appelle $s_{max}$. On calcule, pour chaque coefficient curvelet, $c_{t,s,\theta_{sb},i,j}$, ses parents aux échelles inférieures de fréquence ayant de l'intérêt (autrement dit, contenant de l'information haute fréquence). Dans l'exemple présent, on calcule les parents sur deux échelles seulement, $u_{Max}=2$. On somme ensuite ces coefficients parents. On a donc :

$$|c_{concatene}| = \sum_{u=0}^{u_{Max}} |c_{s_{max}-u}^{parent}|$$

où $u_{Max}$ est le nombre d'échelles considérés, $s_{max}-u$ est l'indice d'une échelle de la représentation.

Les coefficients concaténés ne dépendent donc que du temps t et de la sous-bande $\theta_{sb}$ (dont les indices sont pris à $s_{max}$). Sur ces matrices de coefficients concaténés, on applique une détection de lignes. On commence par calculer pour chaque coefficient concaténé, la réponse maximale, 37, des filtres orientés rattachés à cette sous-bande $\theta_{sb}$, i.e, par convolution avec un vecteur linéaire orienté :

$$F(c_{concatene}) = max_{filtres} \sum_{p,q \in filtre} |c_{concatene}(\theta_{sb}, i+p, j+q)|$$

Les filtres étant des filtres orientés, ils seront calculés en début du procédé, par exemple, ou connus à l'avance, selon des méthodes connues de l'Homme du métier. Le nombre de vecteurs orientés rattachés à une sous-bande dépend des paramètres de la décomposition et de la taille de ce vecteur. Typiquement, pour une décomposition en curvelets de 6 échelles et 12 angles à l'échelle basse fréquence, pour détecter des objets de petite taille, on peut prendre par exemple des vecteurs de longueur 5. Dans ces conditions, un ou deux vecteurs par sous-bandes sont suffisants pour couvrir toutes les orientations.

Le résultat de la convolution est ensuite segmenté pour identifier les lignes, par exemple, par le biais d'un seuillage 38 d'hystérésis. Les traits ainsi obtenus sont enregistrés dans une mémoire du dispositif de traitement afin d'être mis en correspondance entre les images. L'avantage d'un seuillage par hystérésis est de limiter les faux-positifs et d'éviter de détecter un segment par morceaux.

Le procédé va choisir une valeur de seuil global pour toutes les matrices de coefficients concaténés, un seuil haut $T_{haut} = \alpha T_{otsu}$ et un seuil bas $T_{bas} = \beta T_{otsu}$ avec $\alpha > \beta$. Pour ce faire, on va calculer l'histogramme des maximums des sous-bandes concaténées. L'histogramme se présente, dans le cas où certaines sous-bandes ne contiennent que du bruit, par un « pic » à des valeurs basses. Plus loin dans les valeurs, les autres maxima sont représentés. Le seuil global $T_{otsu}$ est donné par la valeur résultante de l'application de la méthode d'Otsu connue de l'Homme du métier sur cet histogramme, cette valeur permettant de séparer un histogramme en deux. Une autre manière de choisir ces seuils serait de les définir en fonction de l'écart-type du bruit. On aurait ainsi : $T_{haut} = \alpha \sigma_{sb}$ et $T_{bas} = \beta \sigma_{sb}$.

L'étape suivante est une étape 40 d'appariement des traits. La détection des traits a permis de récupérer une collection de traits dont on connaît la position à chaque échelle. Étant donné que ces positions sont liées entre les échelles on ne s'intéresse plus qu'à la position d'un trait qu'on appellera référent, c'est-à-dire la position du trait à l'échelle la plus haute fréquence. L'appariement comprend deux étapes : la définition d'une fonction de coût et l'optimisation de cette fonction. Il existe plusieurs méthodes d'optimisation connues de l'Homme du métier.

Dans l'exemple qui va être décrit, la méthode d'optimisation choisie est la méthode de Kuhn-Munkres. On prend comme fonction de coût, une fonction qui prend en compte les grandeurs jugées importantes dans le domaine des curvelets.

Étant donné que les images sont acquises en temps réel (15 à 30 images par seconde), et qu'il s'agit d'images anatomiques, on s'attend à ce que les contours détectés aient été peu modifiés entre deux images. On choisit, par exemple, comme indicateurs de ressemblance les indicateurs suivants : la longueur, l'intensité, le déplacement, l'angle du trait. On cherche à apparier les traits dans le temps, on compare donc un trait détecté au temps t-1, 39, aux traits détectés au temps t, en utilisant les valeurs des coefficients détectés au temps t-1 mémorisés, 40 par exemple dans le système. L'expression « temps t-1 » désigne de manière plus large dans la description un temps antérieur au temps t considéré, (t-1), (t-2), (t-3), ....

Les étapes mises en oeuvre pour l'appariement des traits sont les suivantes. On teste, 41, si le coefficient curvelet appartient à un trait détecté au temps t ou à un trait détecté au temps t-1. Si le coefficient curvelet n'appartient à aucun trait détecté, 42, alors le procédé décrète qu'il n'appartient pas à un objet mais au fond de l'image. Si le coefficient curvelet appartient à un trait détecté, 43, alors le procédé teste 44 si le trait auquel le coefficient appartient est apparié à un trait détecté au précédent temps t-1 ou au temps t-2. Dans le cas où la réponse est négative, 45, alors le procédé considère le trait comme appartenant au fond de l'image. Dans le cas contraire, les coefficients composant le trait détecté et apparié sont considérés comme faisant partie des objets, 46. A la fin de ces étapes le procédé dispose de plusieurs ensembles de coefficients curvelets et de traits appariés sur lesquels il va appliquer une étape de filtrage temporel 47 adapté au type du coefficient curvelet. Le premier ensemble contiendra, par exemple, les coefficients curvelets qui ont été détectés et appariés, le deuxième ensemble pourra comporter les coefficients curvelets non détectés ou détectés mais non appariés. Le deuxième ensemble pourrait être décomposé en deux sous-ensembles comprenant pour le premier les coefficients non détectés, et pour le second les coefficients détectés et non appariés. Dans ce cas les coefficients pour l'étape de filtrage temporel seront différents. L'idée par exemple est d'appliquer un filtrage plus fort pour des coefficients détectés et non appariés que pour des coefficients non détectés.

Les énergies correspondant aux traits sont définies ci-dessous. On notera $L_{min}$ la longueur du plus petit des traits à comparer, et $L_{max}$ la longueur du plus grand des traits à comparer :

$$E_{longueur} = 1 - \frac{L_{min}}{L_{max}}$$

de même on note $I_{min}$ l'intensité la plus faible des deux traits et $I_{max}$ l'autre

$$E_{intensite} = 1 - \frac{I_{min}}{I_{max}}$$

On cherche à minimiser l'énergie globale, donc à établir des énergies à minimiser, et qui sont toutes du même ordre de grandeur. Les longueurs des traits vont être ordonnées pour que l'énergie vaille la même chose qu'il s'agisse d'un allongement du trait ou d'un rétrécissement. Dans l'exemple donné, l'une ou l'autre de ces possibilités sont équivalentes. Il en est de même pour l'intensité. Ainsi, ces énergies seront proches de 0 s'il n'y a pas eu de changement, et proches de 1 s'il y a eu de forts changements dans les caractéristiques du trait.

En ce qui concerne le déplacement du trait, on mesure la distance, par exemple au sens de Manhattan, entre les deux extrémités des segments. Autrement dit, on mesure la distance entre une première extrémité du trait détecté au temps t et au temps t-1, et entre l'autre extrémité du trait détecté au temps t et au temps t-1. Cela permet, en cas de rotation par rapport au centre, de ne pas avoir de distance nulle. En outre, afin de rapporter la distance proche de la valeur 1 en cas de déplacement du trait jugé grand, on normalise chacun des résultats par les dimensions de la sous-bande. Ainsi, la distance selon l'un des axes est multipliée par $\mu/m$ où m est la dimension (dans l'autre cas, on divise par n) et $\mu$ est un paramètre permettant de fixer le déplacement admissible. Par exemple, si ce paramètre vaut 4, on autorise un déplacement de 1/4 de la dimension. Au delà de cette valeur, l'énergie sera supérieure à 1, et pénalisera fortement l'énergie globale, de sorte que les traits ne seront pas appariés. Pour s'assurer de cela, si l'énergie de déplacement vaut plus de 1, on impose une valeur maximale à l'énergie globale, qui correspond à un appariement impossible :

$$E_{deplacement} = \frac{(|i_t^I - i_{t-1}^I| + |i_t^E - i_{t-1}^E|)\frac{\mu}{m} + (|j_t^I - j_{t-1}^I| + |j_t^E - j_{t-1}^E|)\frac{\mu}{n}}{2}$$

Les exposants I et E désignent les extrema des traits au temps t et t-1. Enfin, on définit l'énergie liée à l'angle du trait par :

$$E_{angle} = \nu \times (\theta_{t-1} - \theta_t)_{[\Pi]}$$

où les $\theta$ représentent l'orientation des traits aux temps t et t-1. C'est donc la variation qui est pénalisée, modulo $\pi$. On multiplie cette énergie par un paramètre v pour qu'elle soit proche de 1 lorsque la variation des orientations est trop forte. Comme nous travaillons en radians, des variations de l'ordre du dixième sont jugées grandes. Ainsi, une valeur de 10 pour ce paramètre permet que l'énergie soit proche de 1 lorsque la variation vaut 0.1 radian. Le paramètre peut être ajusté en fonction de l'amplitude de mouvement qu'on souhaite laisser.

L'énergie globale se définit donc comme :

$$E_{globale} = w_l E_{longueur} + w_i E_{intensite} + w_d E_{deplacement} + w_a E_{angle}$$

Les coefficients $w_l$, $w_i$, $w_d$, $w_\alpha$, sont des poids traduisant la confiance qu'on a dans les indicateurs. La somme de ces 4 poids doit être égale à 1. Par exemple, le poids associé à l'énergie liée à la longueur est plus faible que celui lié à l'angle, car une petite variation dans les positions extremum du trait (due par exemple à de légers déplacements dans la détection) peut se traduire dans certains cas par des variations assez fortes de la longueur (dans le cas où les longueurs des traits sont faibles, par exemple), tandis que l'angle sera peu impacté par ces petits mouvements. Cependant, la longueur apporte de l'information, et il est donc intéressant de la conserver.

On calcule cette énergie globale $E_{globale}$ pour tous les couples de traits dont un trait est détecté à t et l'autre à t-1. Afin de limiter les calculs inutiles, on se limite au calcul de l'énergie pour des traits dans des sous-bandes voisines. En effet, si les traits sont dans des sous-bandes éloignées, leurs angles sont très différents et résulterait dans une énergie très élevée.

Enfin, comme mentionnée auparavant, on établit une énergie maximale $E_{max}$. Si le trait atteint cette énergie maximale ou la dépasse, l'appariement n'est pas possible.

Une fois toutes les énergies calculées, on applique la méthode de Kuhn-Munkres qui permet d'obtenir la liste des appariements minimisant le poids des énergies. Les traits ayant été appariés sont considérés comme du signal. Quant aux traits non appariés, ils sont constitués d'un ensemble de coefficients dont la valeur est aberrante. Ils sont communément appelés « outliers ». Par abus de langage nous désignerons aussi par « outlier » ces traits non appariés.

L'étape suivante est un filtrage temporel 47 adapté en fonction du type des coefficients. Le filtrage temporel 47 utilise l'information précédemment obtenue sur le type de coefficients curvelets, coefficients détectés et appariés, ou coefficients considérés comme étant du bruit, afin d'appliquer un filtrage différent en fonction du type du coefficient. Cette méthode permet d'appliquer un filtrage fort dans les zones où il n'y a pas eu de mouvement, et un filtrage plus faible dans les zones représentant des traits d'intérêts.

Soit $\alpha_{classe}^t$ le gain du filtrage temporel au temps t, qui dépend de la classe des coefficients. On peut écrire le filtrage temporel de la manière suivante :

$$\left|\tilde{c}_t\right| = \alpha_{classe}^t \left|c_t\right| + (1 - \alpha_{classe}^t)\left|\tilde{c}_{t-1}\right|$$

Une méthode de réalisation utilise, par exemple, deux classes de coefficients auxquelles on associe deux coefficients de gain $\alpha$ et $\beta$, avec $0 < \alpha < \beta \leq 1$.

Si le coefficient curvelet n'a pas été détecté ou s'il a été détecté mais n'a pas été apparié, il appartient à la seconde classe. Il est considéré comme faisant partie d'un trait aberrant, on applique le gain $\alpha$ à ce coefficient et le gain $(1-\alpha)$ sur le même coefficient à t-1 :

$$\left|\tilde{c}_t\right| = \alpha\left|c_t\right| + (1 - \alpha)\left|\tilde{c}_{t-1}\right|$$

Si le coefficient a été détecté au temps t ou au temps t-1, et que le trait auquel il appartient a été apparié, on lui applique un gain $\beta$, et on applique à ses voisins, un gain qui décroît de $\beta$ à $\alpha$, en fonction de la distance du voisin au coefficient détecté, avec une décroissance qui peut-être par exemple linéaire ou gaussienne :

$$\left|\tilde{c}_t\right| = \beta\left|c_t\right| + (1 - \beta)\left|\tilde{c}_t - 1\right|$$

Cette décroissance s'effectue dans un voisinage intra-échelle. On applique le même procédé sur toutes les sous-bandes de la même échelle, en partant d'un gain $\beta'$ tel que $\alpha < \beta' \leq \beta$. Les rampes sont utilisées afin d'éviter des artefacts de rebonds lors de la reconstruction. On peut choisir d'appliquer ce gain même aux échelles de plus basses fréquences où aucune détection n'a été faite. Dans ce cas, on augmente le contraste des coefficients dont l'un des enfants a été détecté et apparié. En cas de conflit (dans le cas où différents gains peuvent être appliqués au même coefficient de par le fait des rampes et de la décimation), c'est le gain le plus élevé qui est conservé.

Dans le cas où $\beta = 1$, ce procédé permet de réduire le bruit tout en conservant le contraste des objets d'intérêt, et évite la création d'un artefact de retard.

Dans un deuxième mode de réalisation, les coefficients curvelets détectés au temps t sont moyennés avec l'ensemble des coefficients curvelets détectés au temps t-1 et avec lesquels ils sont appariés.

Dans une troisième méthode, les coefficients débruités $|\tilde{c}_t|$, au temps t sont utilisés à la place des coefficients bruités $|c_t|$ dans le moyennage, soit pour les coefficients ayant appartenu à un trait au temps précédent, soit pour les coefficients appartenant à un trait apparié à ce temps, soit pour ces deux types de coefficients.

Selon une variante de réalisation, il est possible d'augmenter le contraste à partir des éléments détectés. Cette étape peut être réalisée avant ou après l'étape de filtrage temporel.

Une méthode est par exemple de multiplier tous les coefficients curvelets dont le gain est supérieur à $|\xi \times \beta|$ par un coefficient $\rho$, avec $\rho > 1$. Cela permet d'augmenter à la fois les coefficients détectés, ainsi que les coefficients présents dans les sous-bandes voisines, évitant de nouveau le problème des rebonds proches des contours lors de la reconstruction. Le coefficient $\xi$ doit être choisi tel que : $\alpha < \xi\beta < \beta$. Les « outliers » ayant été écartés par l'étape d'appariement, le rehaussement de contraste ne s'appliquera donc qu'aux contours.

Un autre mode de réalisation, qui ne tient pas compte des coefficients du filtrage temporel, serait d'appliquer un coefficient d'augmentation de contraste d'une manière similaire à la méthode de filtrage temporel. On appliquerait un coefficient multiplicateur $\rho$ aux éléments détectés, avec une décroissance de $\rho$ à 1 dans un voisinage intra-échelle. Le même procédé est appliqué à partir d'un gain $\rho'$ ($1 < \rho' \leq \rho$) aux sous-bandes de la même échelle. Ce procédé peut être appliqué aussi à travers les échelles. Il est aussi possible de prendre un gain $\rho$ qui dépend de l'échelle, ce qui permet de rehausser plus le contraste sans augmenter localement le bruit.

La dernière étape 48 du procédé consiste à appliquer une transformée 2D IDCT pour retrouver les images débruitées 49.

La figure 4, représente un exemple de système permettant la mise en oeuvre du procédé selon l'invention. Il comporte un détecteur de rayons X, 50, détectant les images, le détecteur étant relié à un dispositif de traitement 51 comprenant un processeur 52 adapté à exécuter les étapes du procédé selon l'invention, une mémoire de stockage 53 des transformées curvelets.

Le procédé selon l'invention repose notamment sur un appariement dans les curvelets qui permet notamment de s'affranchir du problème de transparence des images. En effet, par la physique des rayons X, les différentes couches anatomiques se trouvent représentées sur le même plan dans l'image, et un pixel peut représenter différentes couches. Dans ce contexte, un recalage n'est pas vraiment possible puisqu'on ne peut associer un seul vecteur de mouvement à chaque pixel, les couches ayant des mouvements différents, les objets présents sur un pixel auront des mouvements différents. Comme les curvelets séparent les éléments en fonction de leur orientation, et séparent le fond des éléments fins, il est possible sur les coefficients fins de supposer en première approximation, qu'à chaque coefficient peut être associé un seul vecteur de mouvement.

**Revendications**

1. Procédé de réduction de bruit dans une séquence d'images fluoroscopiques acquises par un détecteur à rayons X, une image comprenant un ou plusieurs traits, une image étant représentée par des coefficients curvelets $c_{t,s,\theta sb,i,j}$ où s est l'échelle de l'image, $\theta_{sb}$ sa sous-bande liée à l'angle d'un trait dans l'image et (i,j) sa position relative, le procédé étant **caractérisé en ce qu'**il comporte en combinaison au moins les étapes suivantes :

   • on détecte (36) des traits dans une image dans le domaine des curvelets, en utilisant les coefficients curvelets sous-bande par sous-bande et en déterminant la réponse maximale d'un filtre attaché à une sous-bande $\theta_{sb}$, et on mémorise les traits détectés,
   • on apparie localement les traits détectés,

      • on considère un ensemble de coefficients curvelets, on teste (41) si un coefficient curvelet considéré appartient à un trait détecté au temps t ou à un instant antérieur,

         • si le coefficient curvelet appartient à un trait détecté, on teste (44) si le trait, auquel le coefficient appartient, est apparié à un trait détecté à un temps antérieur, si c'est le cas, alors, on classe le coefficient curvelet dans un premier ensemble,
         • si le coefficient n'est pas détecté (42) ou si le coefficient curvelet appartient à un trait détecté mais non apparié à un trait détecté à un temps antérieur (45), alors on constitue au moins un deuxième ensemble,

      • on applique un premier coefficient pour filtrer temporellement les coefficients curvelets appartenant au premier ensemble et au moins un deuxième coefficient pour filtrer temporellement les coefficients curvelets appartenant au deuxième ensemble,
      • on détermine l'image débruitée à partir des coefficients curvelets filtrés temporellement.

2. Procédé selon la revendication 1 **caractérisé en ce qu'**il comporte une étape de détection des traits comprenant les étapes suivantes ::

      • on détecte le ou les traits dans l'image par traitement dans le domaine des curvelets en concaténant les coefficients curvelets sous-bandes par sous-bandes,

         • on se place à l'échelle en curvelet de plus haute fréquence $s_{max}$ dans la décomposition,
         • on calcule, pour chaque coefficient curvelet $c_{t,s,\theta sb,i,j}$, ses coefficients parents aux échelles inférieures contenant de l'information haute fréquence,
         • on somme ensuite (36) ces coefficients curvelets pour obtenir une matrice de coefficients concaténés $c_{concatene}$,
         • on applique la détection des traits sur les matrices de coefficients concaténés,
         • on calcule (37) pour chaque coefficient concaténé la réponse maximale des filtres orientés rattachés à cette sous-bande :

$$F(c_{concatene}) = max_{filtres} \sum_{p,q \in filtre} |c_{concatene}(\theta_{sb}, i+p, j+q)|$$

      avec p, q des positions qui donnent une orientation,

• on seuille par hystérésis (38) le résultat de la réponse maximale qui donne les traits retenus et enregistrés pour l'image donnée, lorsqu'un coefficient est supérieur au seuil haut, on conserve tout son voisinage étendu supérieur au seuil bas,
• on définit un trait référent en sélectionnant la position du trait à l'échelle de fréquence la plus haute.

3. Procédé selon la revendication 1 **caractérisé en ce qu'**il comporte une étape d'appariement local (40) des traits comprenant les étapes suivantes:

• on considère un ensemble de coefficients curvelets définis à un instant t-1 antérieur à l'instant t,

• on teste (41) si un coefficient curvelet appartient à un trait détecté à l'instant t ou à l'instant t-1,
• si le résultat du test est négatif, alors (42), on classe le coefficient curvelet comme n'appartenant pas à un objet,
• si le résultat du test est positif (43), alors

• on teste (44) si le trait auquel appartient le coefficient est apparié à un trait détecté à l'instant t-1 ou à l'instant t-2,
• si le résultat du test est négatif, alors (45) on classe le coefficient curvelet comme n'appartenant pas à un objet,
• si le résultat du test est positif, alors (46) on classe le coefficient curvelet comme appartenant à un objet,

• on obtient au moins deux ensembles de coefficients correspondant à au moins deux types de coefficients curvelets.

4. Procédé selon la revendication 1 **caractérisé en ce qu'**il comporte une étape de filtrage temporel (47) comprenant les étapes suivantes:

• pour les coefficients curvelets n'appartenant pas à un objet, on moyenne le coefficient détecté à l'instant t avec le coefficient détecté à l'instant t-1,
• pour les coefficients curvelets appartenant à un objet, on applique un filtrage plus faible.

5. Procédé selon la revendication 1 **caractérisé en ce qu'**il comporte une étape de transformation inverse (48) où l'on détermine (49) l'image débruitée à partir des coefficients filtrés temporellement.

6. Procédé selon la revendication 1 **caractérisé en ce que** pour l'étape de filtrage temporel on définit deux coefficients de gain $\alpha$ et $\beta$, avec $0 < \alpha < \beta \leq 1$ :

• si le coefficient curvelet n'a pas été détecté, ou s'il a été détecté mais n'a pas été apparié, on applique le gain $\alpha$ aux coefficients à l'instant t et le gain $(1-\alpha)$ sur le même coefficient à t-1

$$|\tilde{c}_t| = \alpha|c_t| + (1-\alpha)|\tilde{c}_{t-1}|$$

• si le coefficient a été détecté au temps t ou au temps t-1, on lui applique un gain $\beta$, et on applique à ses voisins un gain qui décroît de $\beta$ à $\alpha$, en fonction de la distance du voisin au coefficient détecté avec une décroissance donnée.

7. Procédé selon la revendication 6 **caractérisé en ce que** la décroissance du gain est réalisée de manière linéaire ou gaussienne.

8. Procédé selon la revendication 1 **caractérisé en ce que** les coefficients curvelets détectés au temps t sont moyennés avec l'ensemble des coefficients curvelets détectés au temps t-1 et avec lesquels ils sont appariés.

9. Procédé selon la revendication 8 **caractérisé en ce que** l'on utilise les coefficients curvelets débruités au temps t à la place des coefficients curvelets bruités dans le moyennage, soit pour les coefficients ayant appartenu à un trait au temps précédent, soit pour les coefficients appartenant à un trait apparié à ce temps, soit pour ces deux types de coefficients.

10. Procédé selon la revendication 1 **caractérisé en ce que** pour apparier les traits appartenant à un même objet, on exécute les étapes suivantes :

• on définit une fonction de coût et on utilise comme indicateurs de ressemblance la longueur, l'intensité, le déplacement, l'angle du trait,
• on définit l'énergie globale comme :

$$E_{globale} = w_l E_{longueur} + w_i E_{intensite} + w_d E_{deplacement} + w_a E_{angle}$$

où $w_l$, $w_i$, $w_d$ et $w_a$ traduisent la confiance des indicateurs, avec $w_l$, $w_i$, $w_d$ et $w_a$ =1
• on calcule cette énergie globale pour tous les couples de traits dont un trait est détecté à t et l'autre à t-1,
• on applique une méthode adaptée à obtenir la liste des appariements minimisant le poids des énergies,
• si le coefficient curvelet ne correspond pas à un trait, alors le procédé exécute une étape de moyennage temporel.

11. Procédé selon la revendication 10 **caractérisé en ce que** l'on définit $L_{min}$ la longueur du plus petit des traits à comparer et $L_{max}$ la longueur du plus grand des traits à comparer :

$$E_{longueur} = 1 - \frac{L_{min}}{L_{max}}$$

avec $I_{min}$ l'intensité la plus faible des deux traits et $I_{max}$ l'autre

$$E_{intensite} = 1 - \frac{I_{min}}{I_{max}}$$

$$E_{deplacement} = \frac{(|i_t^I - i_{t-1}^I| + |i_t^E - i_{t-1}^E|)\frac{\mu}{m} + (|j_t^I - j_{t-1}^I| + |j_t^E - j_{t-1}^E|)\frac{\mu}{n}}{2}$$

les exposants I et E désignent les extrema des traits au temps t et t-1.

$$E_{angle} = \nu \times (\theta_{t-1} - \theta_t)_{[\Pi]}$$

où les $\theta$ représentent l'orientation des traits détectés aux temps t et t-1.

12. Procédé selon la revendication 6 **caractérisé en ce qu'**il comporte une étape pour augmenter le contraste d'une image en multipliant les coefficients curvelets ayant un gain est supérieur à $| \xi \times \beta |$ par un coefficient p, 1 < p, avec $\xi$ choisi tel que : $\alpha < \xi\beta < \beta$.

13. Procédé selon l'une des revendications précédentes **caractérisé en ce qu'**on applique un coefficient multiplicateur $\rho$ aux coefficients curvelets détectés, avec une décroissance de $\rho$ à 1 dans un voisinage intra-échelle.

**Patentansprüche**

1. Verfahren zum Vermindern von Rauschen in einer Sequenz von fluoroskopischen Bildern, erfasst mit einem Detektor mit Radius X, wobei ein Bild ein oder mehrere Linien umfasst, wobei ein Bild durch Curvelet-Koeffizienten $c_{t,s,\theta sb,i,j}$ repräsentiert wird, wobei s die Skala des Bildes ist, $\theta_{sb}$ sein Subband ist, verbunden mit dem Winkel einer Linie in dem Bild, und (i, j) seine relative Position ist, wobei das Verfahren **dadurch gekennzeichnet ist, dass** es in Kombination wenigstens die folgenden Schritte beinhaltet:

   • Erkennen (36) der Linien in einem Bild in der Curvelet-Domäne durch Nutzen der Curvelet-Koeffizienten Subband für Subband und durch Bestimmen der maximalen Antwort eines Filters, das an ein Subband $\theta_{sb}$ angegliedert ist, und Speichern der erkannten Linien,
   • lokales Paaren der erkannten Linien,

   ◦ Betrachten eines Satzes von Curvelet-Koeffizienten, Prüfen (41), ob ein betrachteter Curvelet-Koeffizienten zu einer Linie gehört, die zum Zeitpunkt t oder zu einem früheren Zeitpunkt erkannt wurde,
   ◦ Prüfen (44), wenn der Curvelet-Koeffizient zu einer erkannten Linie gehört, ob die Linie, zu der der Koeffizient gehört, mit einer zu einem früheren Zeitpunkt erkannten Linie gepaart ist, wenn ja, Einordnen des Curvelet- Koeffizienten in einen ersten Satz,
   ◦ wenn der Koeffizient nicht erkannt (42) wurde oder wenn der Curvelet-Koeffizient zu einer erkannten Linie gehört, aber nicht mit einer zu einem früheren Zeitpunkt (45) erkannten Linie gepaart ist, Bilden wenigstens eines zweiten Satzes,

   • Anwenden eines ersten Koeffizienten zum zeitlichen Filtern der Curvelet-Koeffizienten, die zu dem ersten Satz gehören, und wenigstens eines zweiten Koeffizienten zum zeitlichen Filtern der Curvelet-Koeffizienten, die zu dem zweiten Satz gehören,
   • Bestimmen des entrauschten Bildes auf der Basis der zeitlich gefilterten Curvelet-Koeffizienten.

2. Verfahren nach Anspruch 1, **dadurch gekennzeichnet, dass** es einen Schritt des Erkennens von Linien umfasst, der die folgenden Schritte beinhaltet:

   ◦ Erkennen der ein oder mehreren Linien in dem Bild durch Verarbeitung in der Curvelet-Domäne durch Verketten der Curvelet-Koeffizienten Subband für Subband,

   ◦ Platzieren auf der Skala im Curvelet einer höchsten Frequenz $s_{max}$ in der Zerlegung,
   ◦ Berechnen, für jeden Curvelet-Koeffizienten $c_{t,s,\theta sb,i,j}$, seiner Stammkoeffizienten auf den tieferen Skalen, die Hochfrequenzinformationen enthalten,
   ◦ nachfolgend Summieren (36) dieser Curvelet-Koeffizienten, um eine verkettete Koeffizientenmatrix $c_{concatene}$ zu erhalten,
   ◦ Anwenden der Erkennung der Linien auf die verketteten Koeffizientenmatrizen,
   ◦ Berechnen (37), für jeden verketteten Koeffizienten, der maximalen Antwort der orientierten Filter, die an dieses Subband angegliedert sind:

$$F(c_{concatene}) = max_{filtres} \sum_{p,q \in filtre} |c_{concatene}(\theta_{sb}, i+p, j+q)|$$

   wobei p, q Positionen sind, die eine Orientierung angeben,
   ◦ Bilden eines Schwellenwertes durch Hysterese (38) für das Ergebnis der maximalen Antwort, die die für das gegebene Bild erhaltenen und aufgezeichneten Linien angibt, wenn ein Koeffizient höher als die obere Schwelle ist, Konservieren der gesamten weiteren Nachbarschaft, die höher ist als die untere Schwelle,
   ◦ Definieren einer Referenzlinie durch Wählen der Position der Linie auf der höchsten Frequenzskala.

3. Verfahren nach Anspruch 1, **dadurch gekennzeichnet, dass** es einen Schritt des lokalen Paarens (40) von Linien umfasst, der die folgenden Schritte beinhaltet:

   • Betrachten eines Satzes von Curvelet-Koeffizienten, die zu einem Zeitpunkt t-1 vor dem Zeitpunkt t definiert wurden,
   • Prüfen (41), ob ein Curvelet-Koeffizient zu einer Linie gehört, die zum Zeitpunkt t oder zum Zeitpunkt t-1 erkannt wurde,

• Einordnen (42), wenn das Ergebnis der Prüfung negativ ist, des Curvelet-Koeffizienten als nicht zu einem Objekt gehörend,
• wenn das Ergebnis der Prüfung positiv (43) ist, dann

◦ Prüfen (44), ob die Linie, zu der der Koeffizient gehört, mit einer Linie gepaart ist, die zum Zeitpunkt t-1 oder zum Zeitpunkt t-2 erkannt wurde,
◦ Einordnen (45), wenn das Ergebnis der Prüfung negativ ist, des Curvelet-Koeffizienten als nicht zu einem Objekt gehörend,
◦ Einordnen (46), wenn das Ergebnis der Prüfung positiv ist, des Curvelet-Koeffizienten als zu einem Objekt gehörend,

• Erhalten von wenigstens zwei Sätzen von Koeffizienten entsprechend wenigstens zwei Typen von Curvelet-Koeffizienten.

4.  Verfahren nach Anspruch 1, **dadurch gekennzeichnet, dass** es einen Schritt des zeitlichen Filterns (47) beinhaltet, der die folgenden Schritte beinhaltet:

• Mitteln, für die Curvelet-Koeffizienten, die nicht zu einem Objekt gehören, des zum Zeitpunkt t erkannten Koeffizienten mit dem zum Zeitpunkt t-1 erkannten Koeffizienten,
• Anwenden, für die zu einem Objekt gehörenden Curvelet-Koeffizienten, einer schwächeren Filterung.

5.  Verfahren nach Anspruch 1, **dadurch gekennzeichnet, dass** es einen Schritt des Umkehrtransformierens (48) beinhaltet, bei dem das entrauschte Bild auf der Basis der zeitlich gefilterten Koeffizienten bestimmt (49) wird.

6.  Verfahren nach Anspruch 1, **dadurch gekennzeichnet, dass** für den Schritt des zeitlichen Filters zwei Verstärkungskoeffizienten $\alpha$ und ß definiert werden, wobei $0 < \alpha < ß \leq 1$ ist:

• Anwenden, wenn der Curvelet-Koeffizient nicht erkannt wurde oder wenn er erkannt, aber nicht gepaart wurde, des Verstärkungsfaktors $\alpha$ auf die Koeffizienten zum Zeitpunkt t und des Verstärkungsfaktors $(1-\alpha)$ auf denselben Koeffizienten bei t-1:

$$|\tilde{c}_t| = \alpha|c_t| + (1 - \alpha)|\tilde{c}_{t-1}|$$

• Anwenden, wenn der Koeffizient zum Zeitpunkt t oder zum Zeitpunkt t-1 erkannt wurde, eines Verstärkungsfaktors ß darauf, und Anwenden, auf seine Nachbarn, eines Verstärkungsfaktors, der von ß zu $\alpha$ abnimmt, in Abhängigkeit von der Distanz des Nachbarn zu dem mit einer gegebenen Abnahme erkannten Koeffizienten.

7.  Verfahren nach Anspruch 6, **dadurch gekennzeichnet, dass** die Abnahme des Verstärkungsfaktors auf lineare oder auf Gaußsche Weise erfolgt.

8.  Verfahren nach Anspruch 1, **dadurch gekennzeichnet, dass** die Curvelet-Koeffizienten, die zum Zeitpunkt t erkannt werden, mit dem Satz von Curvelet-Koeffizienten gemittelt werden, die zum Zeitpunkt t-1 erkannt werden und mit denen sie gepaart werden.

9.  Verfahren nach Anspruch 8, **dadurch gekennzeichnet, dass** die zum Zeitpunkt t entrauschten Curvelet-Koeffizienten anstelle der beim Mitteln verrauschten Curvelet-Koeffizienten benutzt werden, entweder für die Koeffizienten, die zu einer Linie zu der vorherigen Zeit gehörten, oder für die Koeffizienten, die zu einer zu dieser Zeit gepaarten Linie gehören, oder für diese beiden Koeffiziententypen.

10. Verfahren nach Anspruch 1, **dadurch gekennzeichnet, dass** zum Paaren der zu einem selben Objekt gehörenden Linien die folgenden Schritte ausgeführt werden:

• Definieren einer Kostenfunktion und Benutzen der Länge, der Intensität, der Verschiebung, des Winkels der Linie als Ähnlichkeitsindikatoren,
• Definieren der Gesamtenergie als:

$$E_{globale} = w_l E_{longueur} + w_i E_{intensite} + w_d E_{deplacement} + w_a E_{angle}$$

wobei $w_l$, $w_i$, $w_d$ und $w_a$ die Konfidenz der Indikatoren umsetzen, wobei $w_l$, $w_i$, $w_d$ und $w_a$ = 1;
• Berechnen dieser Gesamtenergie für alle Linienpaare, von denen eine Linie zum Zeitpunkt t und die andere zum Zeitpunkt t-1 erkannt wird,
• Anwenden einer Methode, die zum Erhalten der Liste von Paarungen adaptiert ist, die die Gewichtung von Energien minimiert,
• wenn der Curvelet-Koeffizient keiner Linie entspricht, dann führt das Verfahren einen Schritt des zeitlichen Mittelns durch.

11. Verfahren nach Anspruch 10, **dadurch gekennzeichnet, dass** $L_{min}$ die Länge der kleinsten der zu vergleichenden Linien und $L_{max}$ die Länge der größten der zu vergleichenden Linien definiert:

$$E_{longueur} = 1 - \frac{L_{min}}{L_{max}}$$

wobei $I_{min}$ die geringste Intensität der beiden Linien ist und $I_{max}$ die andere ist:

$$E_{intensite} = 1 - \frac{I_{min}}{I_{max}}$$

$$E_{deplacement} = \frac{(|i_t^I - i_{t-1}^I| + |i_t^E - i_{t-1}^E|)\frac{\mu}{m} + (|j_t^I - j_{t-1}^I| + |j_t^E - j_{t-1}^E|)\frac{\mu}{n}}{2}$$

wobei die Exponenten I und E die Extrema der Linien zu den Zeitpunkten t und t-1 bezeichnen:

$$E_{angle} = \nu \times (\theta_{t-1} - \theta_t)_{[II]}$$

wobei die $\theta$ die Orientierung der zu den Zeitpunkten t und t-1 erkannten Linien repräsentieren.

12. Verfahren nach Anspruch 6, **dadurch gekennzeichnet, dass** es einen Schritt zum Erhöhen des Kontrasts eines Bildes durch Multiplizieren der Curvelet-Koeffizienten mit einem Verstärkungsfaktor beinhaltet, der größer ist als $|\xi \times \beta|$ durch einen Koeffizienten p, 1 < p, wobei $\xi$ so gewählt wird, dass: $\alpha < \xi\beta < \beta$.

13. Verfahren nach einem der vorherigen Ansprüche, **dadurch gekennzeichnet, dass** ein Multiplikationskoeffizient $\rho$ auf die erkannten Curvelet-Koeffizienten angewandt wird, mit einer Abnahme von $\rho$ zu lin einer Intra-Skalen-Nachbarschaft.

**Claims**

1. A method for reducing noise in a sequence of fluoroscopic images acquired by an X-ray detector, an image comprising one or more lines, an image being represented by curvelet coefficients $c_{t,s,\theta sb,i,j}$, where s is the scale of the image, $\theta_{sb}$ its sub-band linked to the angle of a line in the image and (i,j) its relative position, the method being **characterized in that** it comprises in combination at least the following steps:

• detection (36) of the lines in an image in the curvelet domain, using the curvelet coefficients sub-band by sub-band and by determining the maximum response of a filter associated with a sub-band $\theta_{sb}$, and the detected lines are stored in memory,
• locally matching the detected lines,

• considering a set of curvelet coefficients, testing (41) whether a curvelet coefficient being considered belongs to a line detected at the time t or at an earlier time,

> • if the curvelet coefficient belongs to a detected line, testing (44) whether the line, to which the coefficient belongs, is matched to a line detected at an earlier time, if this is the case, then the curvelet coefficient is categorized in a first set,
> • if the coefficient is not detected (42), or if the curvelet coefficient belongs to a line detected but non matched to a line detected at an earlier time (45), then forming at least a second set,

• applying a first coefficient for time-domain filtering the curvelet coefficients belonging to the first set and at least a second coefficient for time-domain filtering the curvelet coefficients belonging to the second set,
• determining the denoised image using the time-domain filtered curvelet coefficients.

2. The method as claimed in claim 1, **characterized in that** it comprises a step for detection of the lines comprising the following steps:

• detection of the line or lines in the image by processing in the curvelet domain concatenating the curvelet coefficients sub-bands by sub-bands,

> • adopting the scale at the highest frequency curvelet $s_{max}$ in the decomposition,
> • calculating for each curvelet coefficient $c_{t,s,\theta sb,i,j}$, its parent coefficients at the lower scales containing high-frequency information,
> • subsequently summing (36) these curvelet coefficients so as to obtain a matrix of concatenated coefficients $c_{concatenated}$,
> • applying the detection of the lines to the matrices of concatenated coefficients,
> • calculating (37) for each concatenated coefficient, the maximum response of the oriented filters associated with this sub-band :

$$F\left(c_{concatenated}\right) = max_{filters} \sum_{p,q \in filter} \left| c_{concatenated} \left(\theta_{sb}, i+p, j+q\right)\right|$$

> with p, q positions that yield an orientation,
> • the result of the maximum response is thresholded by hysteresis (38) which yields the lines retained and recorded for the given image; when a coefficient is greater than the high threshold, all of its extended neighborhood higher than the low threshold is conserved,
> • defining a reference line by selecting the position of the line at the scale of highest frequency.

3. The method as claimed in claim 1, **characterized in that** it comprises a step for local matching (40) of the lines comprising the following steps:

• considering a set of curvelet coefficients defined at a time t-1 earlier than the time t,

> • testing (41) whether a curvelet coefficient belongs to a line detected at the time t or at the time t-1,
> • if the result of the test is negative, then (42) the curvelet coefficient is categorized as not belonging to an object,
> • if the result of the test is positive (43), then

> > • testing (44) whether the line to which the coefficient belongs is matched to a line detected at the time t-1 or at the time t-2,
> > • if the result of the test is negative, then (45) the curvelet coefficient is categorized as not belonging to an object,
> > • if the result of the test is positive, then (46) the curvelet coefficient is categorized as belonging to an object,

• obtaining at least two sets of coefficients corresponding to at least two types of curvelet coefficients.

4. The method as claimed in claim 1, **characterized in that** it comprises a step for time-domain filtering (47) comprising the following steps:

   • for the curvelet coefficients not belonging to an object, averaging the coefficient detected at the time t with the coefficient detected at the time t-1,
   • for the curvelet coefficients belonging to an object, applying a weaker filtering.

5. The method as claimed in claim 1, **characterized in that** it comprises an inverse transformation step (48) where the denoised image is determined (49) using the time-domain filtered coefficients.

6. The method as claimed in claim 1, **characterized in that**, for the time-domain filtering step defining two gain coefficients $\alpha$ and $\beta$, with $0 < \alpha < \beta \leq 1$:

   • if the curvelet coefficient has not been detected, or if it has been detected but has not been matched, applying the gain $\alpha$ to the coefficients at the time t and the gain $(1-\alpha)$ to the same coefficient at t-1

$$\left|\tilde{c}_t\right| = \alpha|c_t| + (1-\alpha)\left|\tilde{c}_{t-1}\right|$$

   • if the coefficient has been detected at the time t or at the time t-1, applying a gain $\beta$ to it, and applying a gain that decreases from $\beta$ to $\alpha$ to its neighbors, as a function of the distance from the neighbor to the detected coefficient with a given rate of decrease.

7. The method as claimed in claim 6, **characterized in that** the rate of decrease of the gain is applied in a linear or Gaussian manner.

8. The method as claimed in claim 1, **characterized in that** the curvelet coefficients detected at the time t are averaged with the set of the curvelet coefficients detected at the time t-1 and with which they are matched.

9. The method as claimed in claim 8, **characterized in that** the curvelet coefficients denoised at the time t are used in place of the noisy curvelet coefficients in the averaging, either for the coefficients having belonged to a line at the preceding time, or for the coefficients belonging to a line matched at this time, or for these two types of coefficients.

10. The method as claimed in claim 1, **characterized in that**, in order to match the lines belonging to the same object, the following steps are executed:

   • defining a cost function and using the length, the intensity, the displacement, the angle of the line as resemblance indicators,
   • defining the total energy as:

$$E_{total} = w_l E_{length} + w_i E_{intensity} + w_d E_{displacement} + w_a E_{angle}$$

   where $w_i$, $w_i$, $w_d$ and $w_a$ correspond to the confidence of the indicators, with $w_l$, $w_i$, $w_d$ and $w_a = 1$
   • calculating this total energy for all the pairs of lines, one line of which is detected at t and the other at t-1,
   • applying a method that is adapted to obtain the list of the matchings minimizing the weight of the energies,
   • if the curvelet coefficient does not correspond to a line, then the method executes a time averaging step.

11. The method as claimed in claim 10, **characterized in that** the following are defined: $L_{min}$ the length of the smallest of the lines to be compared and $L_{max}$ the length of the largest of the lines to be compared:

$$E_{length} = 1 - \frac{L_{min}}{L_{max}}$$

with $I_{min}$ the lower intensity of the two lines and $I_{max}$ the other

$$E_{intensity} = 1 - \frac{I_{min}}{I_{max}}$$

$$E_{displacement} = \frac{(|i_t^I - i_{t-1}^I| + |i_t^E - i_{t-1}^E|)\frac{\mu}{m} + (|j_t^I - j_{t-1}^I| + |j_t^E - j_{t-1}^E|)\frac{\mu}{n}}{2}$$

the exponents I and E denote the extrema of the lines at the time t and t-1.

$$E_{angle} = \nu \times (\theta_{t-1} - \theta_t) \quad [\text{II}]$$

where the $\theta$ represent the orientations of the detected lines at the times t and t-1.

**12.** The method as claimed in claim 6, **characterized in that** it comprises a step for increasing the contrast of an image by multiplying the curvelet coefficients having a gain greater than $| \xi \times \beta |$ by a coefficient p, $1 < \rho$, with $\xi$ chosen such that: $\alpha < \xi\beta < \beta$.

**13.** The method as claimed in one of the preceding claims, **characterized in that** a multiplier coefficient $\rho$ is applied to the detected curvelet coefficients, with a decrease from $\rho$ to 1 within an intra-scale neighborhood.

FIG.1

FIG.2

FIG.4

Image bruitée à t — 30

2D DCT — 31

Trouver parent,
Voisins corrélés — 32

34

Modification
de $|c_t|$

non ← Sont-ils dans la
même zone de la
fonctionnelle ? — 33

oui

Application de la
fonction de seuillage — 35

FIG.3

Concaténation
des échelles — 36

Convolution avec un
vecteur linéaire orienté — 37

Seuillage d'hystérésis — 38

39

Coefficients à t-1 → Appariement des traits — 40

oui — 43

Le coefficient
appartient-t-il à un trait
de t ou de t-1 ? — 41

44

Trait apparié à un trait
du temps précédent
? — 45

non

non — 42

oui — 46

Filtrage temporel adapté
au type du coefficient — 47

2D IDCT — 48

Image débruitée — 49

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2978273

**Littérature non-brevet citée dans la description**

- A device enhancing and denoising algorithm for x-ray cardiac fluoroscopy. **BISMUTH et al.** Pattern Recognition, 2008, ICPR, 2008, 19th International Conference. IEEE, 2008, 1-4
- Adaptive spatio-temporal denoising of fluoroscopic x-ray sequences. *Biomedical Signal Processing and control,* 2012, vol. 7 (2), 173-179
- **AUVRAY et al.** *Joint motion estimation and layer segmentation in transparent image sequences- Application to transparent-motion-compensated noise reduction in x-ray image sequences,* 2008
- **S.NIGAM ; A.KHARE.** Curvelet transform-based technique for tracking of moving objects. *Computer Vision, IET,* 2012, vol. 6 (3), 231-251